# EUROPÄISCHE PATENTSCHRIFT

(11) **EP 2 989 431 B1**
(45) Veröffentlichungstag und Bekanntmachung des Hinweises auf die Patenterteilung: **03.04.2019**
(21) Anmeldenummer: 14723009.8
(22) Anmeldetag: 23.04.2014
(51) Int. Cl.: G01F 23/26

(54) **FÜLLSTANDSMESSANORDNUNG**
FILL LEVEL MEASUREMENT SYSTEM
SYSTÈME DE MESURE DE NIVEAU

(30) Priorität: 24.04.2013 DE 102013207446
(43) Veröffentlichungstag der Anmeldung: 02.03.2016
(73) Patentinhaber: SKF Lubrication Systems Germany AG, 12277 Berlin (DE)
(72) Erfinder: HOPPE, Peter, 12049 Berlin (DE); KREUTZKÄMPER, Jürgen, 74915 Waibstadt-Daisbach (DE); SCHMIDT, Holger, 14532 Klein-Manchow (DE)
(74) Vertreter: Kuhstrebe, Jochen
(86) Internationale Anmeldenummer: PCT/EP2014/058183
(87) Internationale Veröffentlichungsnummer: WO 2014/173925

(56) Entgegenhaltungen:
- EP-A2- 1 961 575
- DE-A1- 19 757 190
- US-A- 3 648 165
- US-A- 4 806 847
- US-A1- 2011 110 792

## Beschreibung

Die Erfindung betrifft eine Füllstandsmessanordnung zur Messung des Füllstandes eines Fluids in einem Behälter, wobei die Füllstandsmessanordnung Sensoren aufweist, die zur Messung einer Kapazität ausgebildet sind, wobei die Füllstandsmessanordnung ein Gehäuse aufweist, in dem ein erster Sensor in einer ersten Höhenposition und ein zweiter Sensor in einer zweiten Höhenposition angeordnet ist, wobei beide Sensoren mit einer Auswerteelektronik zur Messung der jeweiligen Kapazität in Verbindung stehen, wobei der erste Sensor zumindest mit einem Teil seiner Oberfläche in einem ersten lichten Abstand von einem Wandungsabschnitt des Gehäuses angeordnet ist, wobei der zweite Sensor mit zumindest einem Teil seiner Oberfläche in einem zweiten lichten Abstand von einem Wandungsabschnitt des Gehäuses angeordnet ist, wobei der zweite lichte Abstand größer als der erste lichte Abstand ist.

Eine solche Füllstandsmessanordnung ist aus der US 2011/110792 A1 bekannt. Ähnliche und andere Lösungen zeigen die DE 197 57 190 A1**,** die US 4 806 847 A**,** die EP 1 961 575 A2 und die US 3 648 165 A**.**

Die Messung von Füllständen wird bei niedrigviskosen Medien (wie beispielsweise von Wasser und von Ölen) mechanisch vielfach mit einem sogenannten Schwimmerschalter durchgeführt. Bei höherviskosen Medien (wie beispielsweise von Fließfetten) wird dagegen häufig ein elektronisch arbeitender kapazitiver Sensor eingesetzt.

Eine Vereinheitlichung durch den Einsatz eines kapazitiven Sensors auch für Öl ist technisch zwar möglich, allerdings aus Kostengründen mit derzeit verfügbaren Sensoren kaum zu vertreten. Daraus resultiert der Nachteil, dass je nach eingesetztem Medium der Einsatz entweder des einen oder des anderen Sensortyps angezeigt ist. Dies führt zu einer hohen Variantenbildung, die wiederum Kosten verursacht.

Die bislang verfügbaren kapazitiven Sensoren sind dabei teilweise relativ komplex aufgebaut und dadurch wenig kompakt. Weiterhin sind sie teuer.

Der Erfindung liegt die **Aufgabe** zugrunde, eine gattungsgemäße Füllstandsmessanordnung so fortzubilden, dass ein einfacherer und somit kostengünstigerer Aufbau ermöglicht wird, wobei die kapazitive Füllstandsmessung ihre volle Funktionalität beibehalten soll.

Die **Lösung** dieser Aufgabe durch die Erfindung ist dadurch gekennzeichnet, dass der erste lichte Abstand Null ist und dass der zweite lichte Abstand zwischen 0,5 cm und 10 cm beträgt, wobei die beiden Sensoren geometrisch gleich und als dünne Elemente ausgebildet sind, wobei der erste Sensor und der zweite Sensor an einem Trägerelement angeordnet sind, das plattenartig ausgebildet ist, wobei das Trägerelement zumindest teilweise als Leiterplatte ausgebildet ist und die Auswerteelektronik aufweist.

Damit wird es möglich, dass durch den ersten Sensor quasi direkt die Dielektrizitätszahl des zu messenden Mediums ermittelt wird, während der zweite Sensor vergleichend die Dielektrizitätszahl eines konstanten Mediums - meistens ist dies Luft im Inneren des Gehäuses - misst. Die gemessenen Werte der Sensoren werden miteinander verglichen und so auf den Füllstand des Mediums geschlossen.

Da der erste lichte Abstand Null ist, liegt damit die Sensoroberfläche direkt an dem entsprechenden Wandungsabschnitt des Gehäuses an.

Das Trägerelement trägt bevorzugt beide Sensoren sowie die Auswerteelektronik und ist als rechteckförmige Platte ausgebildet.

Der zweite lichte Abstand liegt bevorzugt im Bereich 1 cm und 3 cm.

Die beiden Sensoren sind bevorzugt als rechteckförmige Elemente vorgesehen ist.

Das Gehäuse besteht bevorzugt aus nichtleitendem Material, insbesondere aus Kunststoff.

Die Auswerteelektronik weist vorzugsweise einen einzigen Oszillator auf. Dieser ist vorteilhaft als L-C-Oszillator ausgebildet. Die Umschaltung zwischen den Elektroden kann beispielsweise über PIN-Dioden erfolgen.

Die vorgeschlagene Füllstandsmessanordnung erlaubt einen bislang einzigartigen minimalisierten Aufbau für universelle Anwendungen durch eine vergleichende Messung; dies ermöglicht eine wesentliche Reduzierung der Kosten, wobei gleichzeitig die volle Funktonalität eines kapazitiv arbeitenden Sensors aufrechterhalten wird. Darüber hinaus ergeben sich durch den Aufbau Vorteile hinsichtlich der Robustheit. Im Betrieb zeichnet sich die Anordnung durch einen günstig niedrigen Stromverbrauch aus.

Der Sensor kann innerhalb oder - in hinsichtlich der Abschirmung modifizierter Form - auch außerhalb des Mediums (beispielsweise außen am Gehäuse) angebracht werden, da die Steuerung bzw. die Elektronik mit einem "Teach-Modus" versehen sein kann, der die jeweiligen konkreten Umgebungsbedingungen berücksichtigen kann. Zur Abschirmung für die Montage außerhalb des Behälters können verschiedene aktive Abschirmungsprinzipien genutzt werden (beispielsweise Guarding, Driven Shield oder Bootstrapping).

Das Umschalten des Sensors in einen "Teach-Modus" durch Kurzschließen der Signalleitung mit der +-Leitung ist eine diesbezüglich bevorzugte Möglichkeit.

Die Erfindung stellt insoweit einen kapazitiv arbeitenden Universal-Füllstandssensor für Öle und Fließfette zur Verfügung. Mit ihm wird eine elektronische universelle Sensierung des Füllstandes des Öls bzw. des Fließfetts (insbesondere der NLGI-Klassen 000 und 00) in einem Gehäuse auf der Basis einer vergleichenden kapazitiven Messung möglich.

Insgesamt ergeben sich folgende Vorteile der vorgeschlagenen Füllstandsmessanordnung:
Es ist ein einfacher und kostengünstiger Aufbau der Anordnung durch Integration der Auswerteelektronik und der Sensoren (Messelektroden) auf einer einzigen Leiterplatte gegeben.

Durch die Verwendung eines Referenz-Sensors (Referenzelektrode) sind lediglich Messungen von Frequenzverhältnissen bzw. Frequenzdifferenzen erforderlich. Die Bereitstellung einer exakten, quarzstabilen Absolutfrequenz ist nicht erforderlich.

Die Referenz- und Mediumsmessungen erfolgen über ein und denselben LC-Oszillator. Auf diese Weise gibt es keine Fehler durch unterschiedliche Oszillatordriften.

Die Umschaltung der Messelektroden erfolgt bevorzugt sehr einfach und kostengünstig über PIN-Dioden. Die Entkopplung von Mess- und Referenzelektrode ist trotz des einfachen Aufbaus völlig ausreichend.

Der Oszillator besteht bevorzugt aus einem modifizierten Schmitt-Trigger-Oszillator. Der übliche Widerstand zwischen Ein- und Ausgang wird durch eine Induktivität ersetzt. Dadurch ergibt sich ein relativ stabiler LC-Oszillator, der unter allen Bedingungen problemlos anschwingt.

Die Ansteuerung der PIN-Dioden und die Frequenzauswertung erfolgen direkt über die Portpins eines kleinen Mikrocontrollers. Aufwendige Zwischentreiber sind nicht erforderlich.

Bevorzugt wird in jeder Sekunde (natürlich sind auch andere, insbesondere größere Zeitabstände möglich) eine einzige Messung durchgeführt, welche nur jeweils ca. 5 ms benötigt. Den Rest der Zeit wird der Oszillator ausgeschaltet. Auf diese Weise werden der Stromverbrauch und die Gefahr von Kurzwellenstörungen stark reduziert.

Sämtliche für industrielle elektronische Komponenten üblichen Standards können in der Platine integriert sein, d. h. eine "Short Circuit Protection" (Kurzschlussschutz), eine "Reverse Polarity Protection" (Verpolungsschutz) sowie eine "Surge Protection" (Überspannungsschutz).

Die Versorgungsspannung kann über einen weiten Spannungsbereich von beispielsweise 8 V bis 36 V (max. 40 V) genutzt werden. Die Empfindlichkeit des Sensors kann über einen "Teach-Modus" auf die Umgebung und die Befestigungsart (innerhalb bzw. außerhalb des Medien-Reservoirs) bzw. auf die Geometrie des Gehäuses eingestellt werden.

In der Zeichnung sind Ausführungsbeispiele der Erfindung dargestellt. Es zeigen:
- Fig. 1: schematisch eine erfindungsgemäße Füllstandsmessanordnung in der Seitenansicht,
- Fig. 2: die Füllstandsmessanordnung nach Fig. 1 in der Vorderansicht,
- Fig. 3: die Vorderansicht der Füllstandsmessanordnung ohne Gehäuse,
- Fig. 4: die Einbausituation der Füllstandsmessanordnung (dargestellt ohne Gehäuse) in einen Fluidbehälter in einer hängenden Weise,
- Fig. 5: die Einbausituation der Füllstandsmessanordnung (dargestellt ohne Gehäuse) in einen Fluidbehälter in einer stehenden Weise und
- Fig. 6: ein Blockschaltbild mit Andeutung der Betriebsweise der Füllstandsmessanordnung.

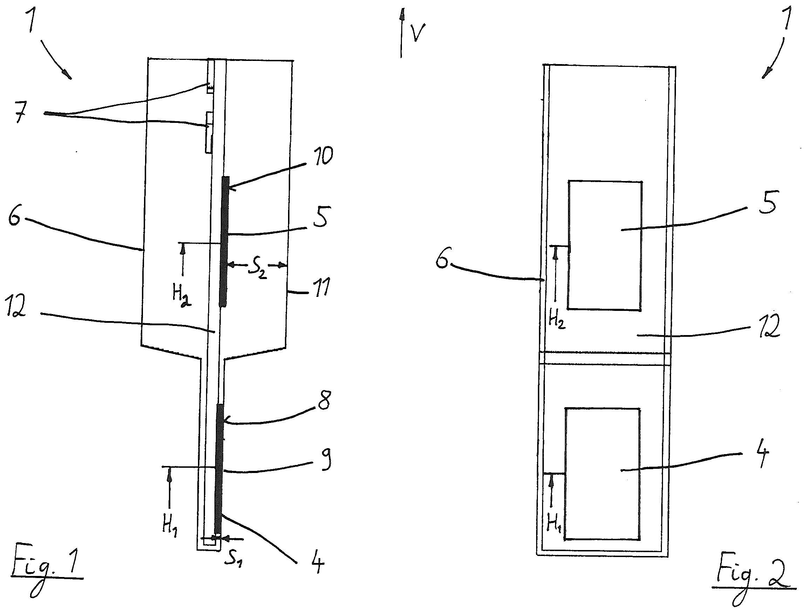

In Fig. 1 und Fig. 2 ist eine Füllstandsmessanordnung 1 skizziert, die nach einem bevorzugten Ausführungsbeispiel der Erfindung ausgebildet ist. Zentrales Bauteil der Füllstandsmessanordnung ist ein Trägerelement 12, das als Leiterplatte ausgeführt ist und bei bestimmungsgemäßer Benutzung sich in vertikale Richtung V erstreckend angeordnet ist. Wesentliche Elemente sind zwei Sensoren oder Elektroden 4 und 5, die vorliegend als plattenförmige Elemente ausgebildet und auf dem Trägerelement 12 angeordnet sind. Die Elektroden 4, 5 haben dabei jeweilige freie Oberflächen 8 und 10. Der erste Sensor 4 fungiert als Messelektrode, der zweite Sensor 5 als Referenzelektrode. Auf dem Trägerelement 12 ist ferner noch eine Auswerteelektronik 7 angeordnet, die mit den beiden Elektroden 4, 5 in elektrischer Verbindung steht.

Wie zu sehen ist, sind die beiden Elektroden 4 und 5 auf unterschiedlichen Höhenpositionen oder Höhenniveaus H₁ und H₂ angeordnet. Das Trägerelement 12 samt Elektroden 4, 5 und Auswerteelektronik 7 ist als plattenförmiges Modul ausgeführt, das in einem Gehäuse 6 untergebracht ist.

Die Ausgestaltung des Gehäuses 6 hat die Besonderheit, dass die Breite des Gehäuses 6 in den beiden Höhenpositionen H₁ und H₂ verschieden ist: Während im Bereich der ersten Höhenposition H₁, also über die Höhenerstreckung der ersten Elektrode 4, das Gehäuse 6 schmal ("schnabelartig") ausgebildet ist, ist es im Bereich der zweiten Höhenposition H₂, also über die Höhenerstreckung der zweiten Elektrode 5, deutlich breiter. Dies hat zur Folge, dass der lichte Abstand s₁ zwischen der Oberfläche 8 des ersten Sensors 4 und dem Wandungsabschnitt 9, der der ersten Elektrode 4 gegenüberliegt, wesentlich kleiner ist (nämlich vorzugsweise sogar Null beträgt), als der lichte Abstand s₂ zwischen der Oberfläche 10 der zweiten Elektrode 5 und dem Wandungsabschnitt 11, der der zweiten Elektrode 5 gegenüberliegt. Der erste Sensor 4, also die Messelektrode, ist somit in einer Art "Schnabel" des Gehäuses 6 eng benachbart zum entsprechenden Gehäuseabschnitt 9 angeordnet, während dies für den zweiten Sensor 5, also für die Referenzelektrode, nicht gilt; hier liegt ein vorliegend mit Luft gefüllter Raum zwischen der Sensoroberfläche 10 und dem Wandungsabschnitt 11 vor, der für eine konstante Dielektrizitätszahl der Referenzelektrode sorgt (die Füllung des Raums kann aber auch mit einem anderen Medium erfolgen).

Der damit erzielbare Effekt ist weiter unten beschrieben.

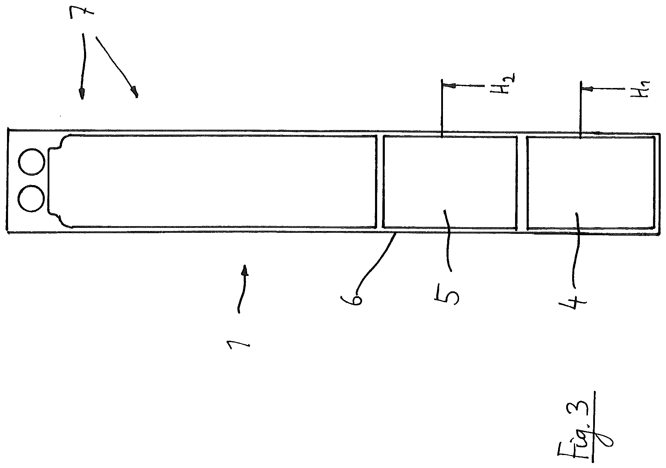

Die Anordnung der Mess- und Referenzelektroden ist in Fig. 3 dargestellt.

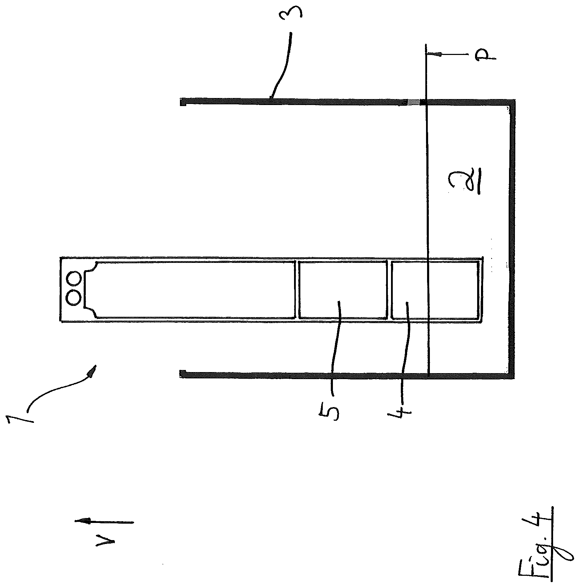

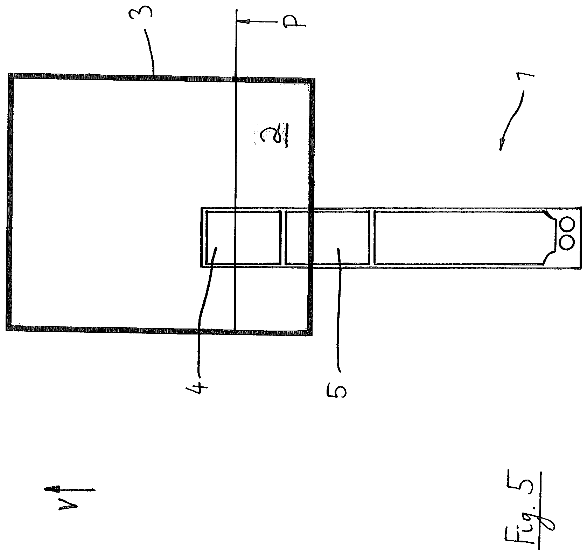

In den Figuren 4 und 5 ist jeweils ein Behälter 3 skizziert, in dem ein bezüglich seines Füllstands zu messendes Medium 2 (beispielsweise Fließfett) enthalten ist. Es geht also darum, den Füllstand P des Mediums 2 im Behälter 3 mittels der Füllstandsmessanordnung 1 auf kapazitive Weise zu messen.

In Fig. 4 ist ein hängender Einbau der Füllstandsmessanordnung 1 zu sehen, d. h. die Anordnung ist am oberen Ende hängend befestigt und ragt unten in das Medium 2 hinein.

Dem gegenüber ist in Fig. 5 ein stehender Messaufbau skizziert, wonach die Füllstandsmessanordnung 1 von unten in den Behälter 3 hineinragt.

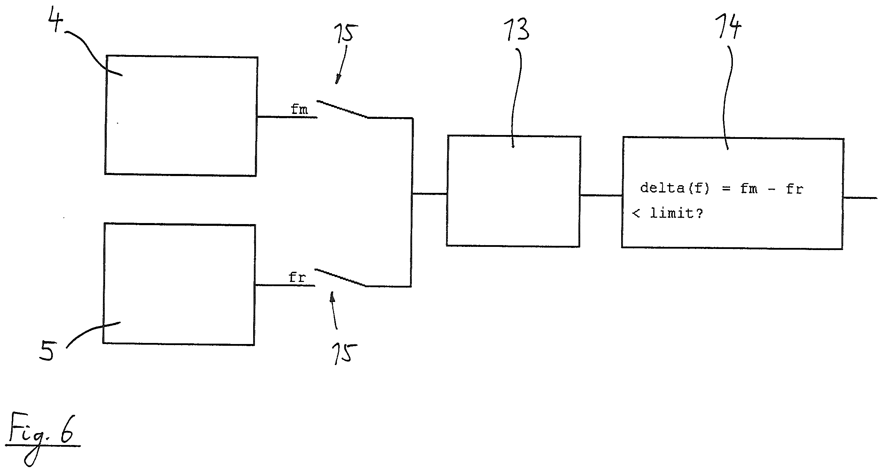

In Fig. 6 ist schematisch ein Blockschaltbild zu sehen, das die Arbeitsweise bei der Messung des Füllstandes P im Behälter 3 illustriert. Beide Sensoren 4 und 5 stehen über Schalter 15 mit einem Oszillator 13 in Verbindung, der wiederum mit einer Recheneinheit 14 verbunden ist.

Der Oszillator 13 erzeugt eine periodische Wechselspannung. Zwar gibt es zahlreiche Möglichkeiten, einen solchen Oszillator aufzubauen, vorliegend ist jedoch ein Oszillator mit L-C-Schwingkreis und einer Verstärkerstufe bevorzugt, was günstig für eine hochfrequente Schwingung ist.

Die Schalter 15 sind bevorzugt als Halbleiterschalter in Form einer PIN-Diode ausgeführt (Positive Intrinsic Negative Diode). Die Kapazität dieser Diode ist im gesperrten Zustand niedrig und hat damit nur einen geringen Einfluss auf die Messung.

Wie zu sehen ist, ist die vorgeschlagene Füllstandsmessanordnung 1 durch Nutzung einer doppelseitig bestückten Leiterplatte sehr kompakt ausgeführt. Da die Funktion auf einer vergleichenden Messung zwischen Mess- und Referenzelektrode 4, 5 basiert, ist das spezifisch ausgebildete Gehäuse 6 erforderlich, d. h. ein Gehäuse mit einer speziellen Geometrie, das die Referenzelektrode 5 und die Messelektrode 4 unterschiedlich einschließt. Das Gehäuse 6 ist so ausgeführt, dass es die Messelektrode 4 unmittelbar direkt umschließt (nahezu keine Luft zwischen Elektrode und Gehäuse), während zwischen der Referenzelektrode 5 und dem Gehäuse 6 ein definierter Raum vorgehalten wird.

Das Gehäuse 6 kann als eigenständiges Gehäuse ausgeführt sein oder aber in andere Gehäusekomponenten, wie beispielsweise in einem Deckel, integriert sein. Die Füllstandsmessanordnung 1 ist so gestaltet, dass sie - wie beschrieben - senkrecht stehend oder hängend arbeiten kann.

Zur Betriebsweise sei folgendes bemerkt:
Die Leiterplatte, d. h. das Trägerelement 12 besitzt die beiden Kapazitäten, nämlich die Mess-Kapazität (Sensor 4) und die Referenz-Kapazität (Sensor 5). Die Mess-Kapazität 4 sitzt in dem "Schnabel" des Gehäuses 6 (s. Fig. 1) und "sieht" möglichst nur das zu messende Medium. Die darüber liegende Referenz-Kapazität 5 "sieht" erst einmal über den lichten Abstand s₂ bis zum Wandungsabschnitt 11 das Referenzmedium mit konstanter Dielektrizitätszahl (zumeist ist dies Luft), da das Gehäuse 6 hier nicht eng anliegt (wie es im Falle des "Schnabels" bei der Mess-Kapazität 4 der Fall ist). Dann erst "sieht" die Referenz-Kapazität 5 das Medium.

Das Messprinzip ist vergleichend: Während sich die gemessene Dielektrizitätszahl des Messsensors bei sich änderndem Füllstandniveau unterhalb des Schaltpunktes ändert, bleibt die des Referenzsensors durch das ihn konstant umgebende Referenzmedium konstant. Bei sich ändernder Dielektrizitätszahl des Messsensors liegt dann ein Signal vor, aus dem geschlossen werden kann, dass der Behälter 3 seinen minimalen Füllstand P erreicht hat.

Ist Fluid im Behälter vorhanden, so erfassen beide Sensoren konstante Dielektriziztätswerte. Aus der sich ergebenden Änderung dieses Wertes für die Messelektrode kann auf die Höhe des Füllstandes P geschlossen werden.

Das Gehäuse 6 der Füllstandsmessanordnung 1 ist im Bereich des zweiten Sensors 5 sowie bis zu seinem oberen Ende vorzugsweise im Querschnitt rund ausgebildet; der "Schnabel", d. h. der Bereich des Gehäuses, in dem der erste Sensor 4 angeordnet ist, ist bevorzugt als im wesentlichen quaderförmiger Abschnitt mit Rundungen im seitlichen Bereich gestaltet.

Entscheidend ist lediglich, dass im Bereich der Höhenerstreckung der jeweiligen Sensoren 4, 5 durch das Gehäuse ein mehr oder weniger ausgeprägter lichter Abstand von der Sensoroberfläche bis zum Gehäusewandung geschaffen wird, um die erläuterte vergleichende Messung durchzuführen.

### Bezugszeichenliste

- 1: Füllstandsmessanordnung
- 2: Fluid / Medium (Öl, Fett)
- 3: Behälter
- 4: erster Sensor (Messelektrode)
- 5: zweiter Sensor (Referenzelektrode)
- 6: Gehäuse
- 7: Auswerteelektronik
- 8: Oberfläche des ersten Sensors
- 9: Wandungsabschnitt
- 10: Oberfläche des zweiten Sensors
- 11: Wandungsabschnitt
- 12: Trägerelement
- 13: Oszillator
- 14: Recheneinheit
- 15: Schalter

- H₁: erste Höhenposition
- H₂: zweite Höhenposition
- s₁: erster lichter Abstand
- s₂: zweiter lichter Abstand
- P: Füllstand
- V: vertikale Richtung

## Patentansprüche

1. Füllstandsmessanordnung (1) zur Messung des Füllstandes (P) eines Fluids (2) in einem Behälter (3), wobei die Füllstandsmessanordnung (1) Sensoren (4, 5) aufweist, die zur Messung einer Kapazität ausgebildet sind, wobei die Füllstandsmessanordnung (1) ein Gehäuse (6) aufweist, in dem ein erster Sensor (4) in einer ersten Höhenposition (H₁) und ein zweiter Sensor (5) in einer zweiten Höhenposition (H₂) angeordnet ist, wobei beide Sensoren (4, 5) mit einer Auswerteelektronik (7) zur Messung der jeweiligen Kapazität in Verbindung stehen, wobei der erste Sensor (4) zumindest mit einem Teil seiner Oberfläche (8) in einem ersten lichten Abstand (s₁) von einem Wandungsabschnitt (9) des Gehäuses (6) angeordnet ist, wobei der zweite Sensor (5) mit zumindest einem Teil seiner Oberfläche (10) in einem zweiten lichten Abstand (s₂) von einem Wandungsabschnitt (11) des Gehäuses (6) angeordnet ist, wobei der zweite lichte Abstand (s₂) größer als der erste lichte Abstand (s₁) ist,
**dadurch gekennzeichnet,**
**dass** der erste lichte Abstand (s₁) Null ist und dass der zweite lichte Abstand (s₂) zwischen 0,5 cm und 10 cm beträgt, wobei die beiden Sensoren (4, 5) geometrisch gleich und als dünne Elemente ausgebildet sind, wobei der erste Sensor (4) und der zweite Sensor (5) an einem Trägerelement (12) angeordnet sind, das plattenartig ausgebildet ist, wobei das Trägerelement (12) zumindest teilweise als Leiterplatte ausgebildet ist und die Auswerteelektronik (7) aufweist.

2. Füllstandsmessanordnung nach Anspruch 1, **dadurch gekennzeichnet, dass** das Trägerelement (12) beide Sensoren (4, 5) sowie die Auswerteelektronik (7) trägt und als rechteckförmige Platte ausgebildet ist.

3. Füllstandsmessanordnung nach Anspruch 1 oder 2, **dadurch gekennzeichnet, dass** der zweite lichte Abstand (s₂) zwischen 1 cm und 3 cm beträgt.

4. Füllstandsmessanordnung nach einem der Ansprüche 1 bis 3, **dadurch gekennzeichnet, dass** die beiden Sensoren (4, 5) als rechteckförmige Elemente ausgebildet sind.

5. Füllstandsmessanordnung nach einem der Ansprüche 1 bis 4, **dadurch gekennzeichnet, dass** das Gehäuse (6) aus nichtleitendem Material besteht, insbesondere aus Kunststoff.

6. Füllstandsmessanordnung nach einem der Ansprüche 1 bis 5, **dadurch gekennzeichnet, dass** die Auswerteelektronik (7) einen einzigen Oszillator, insbesondere einen L-C-Oszillator, aufweist.

7. Füllstandsmessanordnung nach einem der Ansprüche 1 bis 6, **dadurch gekennzeichnet, dass** die Auswerteelektronik (7) für die Umschaltung bei der Kapazitätsermittlung der Sensoren (4, 5) PIN-Dioden aufweist.

## Claims

1. Fill level measurement system (1) for measuring the fill level (P) of a fluid (2) in a container (3), the fill level measurement system (1) having sensors (4, 5) which are designed to measure a capacitance, the fill level measurement system (1) having a housing (6), in which a first sensor (4) is arranged at a first height position (H₁) and a second sensor (5) is arranged at a second height position (H₂), both sensors (4, 5) being connected to evaluation electronics (7) for measuring the respective capacitance, the first sensor (4) being arranged with at least part of its surface (8) at a first clear distance (s₁) from a wall section (9) of the housing (6), the second sensor (5) being arranged with at least part of its surface (10) at a second clear distance (s₂) from a wall section (11) of the housing (6), the second clear distance (s₂) being greater than the first clear distance (s₁),
**characterized in that**
the first clear distance (s₁) is zero and **in that** the second clear distance (s₂) is between 0.5 cm and 10 cm, wherein the two sensors (4, 5) are geometrically identical and formed as thin elements, wherein the first sensor (4) and the second sensor (5) are arranged on a carrier element (12), which is plate-like, wherein the carrier element (12) is at least partly formed as a printed circuit board and has the evaluation electronics (7).

2. Fill level measurement system according to Claim 1, **characterized in that** the carrier element (12) carries both sensors (4, 5) and the evaluation electronics (7) and is formed as a rectangular board.

3. Fill level measurement system according to Claim 1 or 2, **characterized in that** the second clear distance (s₂) is between 1 cm and 3 cm.

4. Fill level measurement system according to one of Claims 1 to 3, **characterized in that** both sensors (4, 5) are formed as rectangular elements.

5. Fill level measurement system according to one of Claims 1 to 4, **characterized in that** the housing (6) consists of non-conducting material, in particular of plastic.

6. Fill level measurement system according to one of Claims 1 to 5, **characterized in that** the evaluation electronics (7) have a single oscillator, in particular an L-C oscillator.

7. Fill level measurement system according to one of Claims 1 to 6, **characterized in that** the evaluation electronics (7) have PIN diodes for the changeover during the capacitance determination of the sensors (4, 5).

## Revendications

1. Système de mesure de niveau (1) destiné à mesurer le niveau (P) d'un fluide (2) dans un contenant (3), dans lequel le système de mesure de niveau (1) comporte des capteurs (4, 5) conçus pour mesurer une capacité, dans lequel un premier capteur (4) est disposé dans une première position en hauteur (H₁) et un deuxième capteur (5) est disposé dans une deuxième position en hauteur (H₂), dans lequel les deux capteurs (4, 5) sont reliés à une électronique d'évaluation (7) destinée à mesurer la capacité respective, dans lequel le premier capteur (4) est disposé avec au moins une partie de sa surface (8) à une première distance libre (s₁) d'une section de paroi (9) du boîtier (6), dans lequel le deuxième capteur (5) est disposé avec au moins une partie de sa surface (10) à une deuxième distance libre (s₂) d'une section de paroi (11) du boîtier (6), dans lequel la deuxième distance libre (s₂) est supérieure à la première distance libre (s1),
**caractérisé en ce que** la première distance libre (s₁) est nulle et la deuxième distance libre (s₂) est comprise entre 0,5 cm et 10 cm, dans lequel les deux capteurs (4, 5) sont géométriquement identiques et sont réalisés sous la forme d'éléments minces, dans lequel le premier capteur (4) et le deuxième capteur (5) sont disposés sur un élément porteur (12) en forme de plaque, dans lequel l'élément porteur (12) est réalisé au moins partiellement sous la forme d'une carte de circuit imprimé et comporte l'électronique d'évaluation (7).

2. Système de mesure de niveau selon la revendication 1, **caractérisé en ce que** l'élément porteur (12) porte les deux capteurs (4, 5) et l'électronique d'évaluation (7) et est réalisé sous la forme d'une plaque rectangulaire.

3. Système de mesure du niveau selon la revendication 1 ou 2, **caractérisé en ce que** la deuxième distance libre (s₂) est comprise entre 1 cm et 3 cm.

4. Système de mesure de niveau selon l'une des revendications 1 à 3, **caractérisé en ce que** les deux capteurs (4, 5) sont réalisés sous la forme d'éléments rectangulaires.

5. Système de mesure de niveau selon l'une des revendications 1 à 4, **caractérisé en ce que** le boîtier (6) est constitué d'un matériau non conducteur, en particulier de matière plastique.

6. Système de mesure de niveau selon l'une des revendications 1 à 5, **caractérisé en ce que** l'électronique d'évaluation (7) comporte un oscillateur unique, en particulier un oscillateur L-C.

7. Système de mesure de niveau selon l'une des revendications 1 à 6, **caractérisé en ce que** l'électronique d'évaluation (7) comporte des diodes PIN pour la commutation effectuée lors de la détermination de capacité des capteurs (4, 5).
